Europäisches Patentamt

European Patent Office

Office européen des brevets

(11) Publication number: **0 458 386 B1**

# EUROPEAN PATENT SPECIFICATION

(45) Date of publication of patent specification: **28.12.94**   (51) Int. Cl.⁵: **C08L  95/00**

(21) Application number: **91201117.8**

(22) Date of filing: **10.05.91**

(54) **Method for preparing stable bitumen-polymer mixtures.**

(30) Priority: **18.05.90 IT 2037690**

(43) Date of publication of application:
**27.11.91 Bulletin  91/48**

(45) Publication of the grant of the patent:
**28.12.94 Bulletin  94/52**

(84) Designated Contracting States:
**AT BE CH DE DK ES FR GB GR LI LU NL SE**

(56) References cited:
**EP-A- 0 343 027**
**WO-A-86/06736**

(73) Proprietor: **EURON S.p.A.**
**Via F. Maritano 26**
**I-20097 San Donato Milanese (IT)**

(72) Inventor: **Mancini, Giuseppe**
**Via degli Olmi 1**
**I-20077 Melegnano-Milan (IT)**
Inventor: **Italia, Paolo**
**Via Paolo Giovio 11**
**I-20144 Milan (IT)**

(74) Representative: **Fusina, Gerolamo et al**
**Ing. Barzanò & Zanardo Milano S.p.A,**
**Via Borgonuovo, 10**
**I-20121 Milano (IT)**

**Description**

This invention relates to a method for preparing stable bitumen-polymer mixtures consisting of subjecting the two components to hot treatment for a sufficiently long time.

Modifying bitumen with polymers and in particular with thermoplastic rubbers is a procedure which was firstly carried out during the 1970s for the purpose of improving the applicational characteristics of the bitumen and in particular its flexibility, its elastic properties at low temperature, its resistance to high temperature deformation, its adhesion and cohesion characteristics and its service life. Such mixtures are prepared by mixing the two components together at a temperature which on the one hand must be such as to ensure sufficient mixture fluidity, but on the other hand must be the lowest possible in order not to favour the triggering of polymer degradation processes. For the same reason the treatment is protracted only for the minimum time required to obtain a homogeneous dispersion. The bitumen-polymer mixtures obtained in this manner have much better characteristics than bitumens as such, but in contrast have the drawback of a certain physical incompatibility between the two components which manifests itself under conditions of sufficient fluidity, such as during hot storage, resulting in the formation of a two-phase system, in which the upper phase is rich in polymer and the lower is rich in bitumen.

This problem cannot be solved by using conventional dispersants, but a partial improvement can be obtained by using low molecular weight polymers. However to obtain the same effect as a high molecular weight polymer a much higher percentage of low molecular weight elastomer has to be used, with consequent cost disadvantage. WO 86/06736 discloses a bitumen-elastomer composition having vibration damping characteristics, containing a 70-95% by weight of a bitumen with a penetration index of between +1 and +7, and a 5-30% by weight of an elastomer, ie a elastomeric block copolymer. The composition is obtained by dissolving or disperding the polymer in bitumen at a temperature preferably near to 200°C, in order to avoid the deterioration of the composition characteristics, varying the mixing time of between 1 and 3 hours and being preferably of 2 hours. We have now discovered a method for preparing stable bitumen-polymer mixtures in which the polymer is a high molecular weight block copolymer formed from styrene and butadiene monomers, which consists surprisingly of prolonging the hot mixing time of the two components well beyond those times which according to the known art if exceeded give rise to the danger of polymer degradation.

The bitumen-polymer mixtures obtained by the treatment according to the present invention are stabilized and therefore when under fluidity conditions such as those which apply during hot storage there is no stratification or formation of heterogeneous zones even after long periods of storage.

These stabilized mixtures possess the flexibility, elasticity, ductility, pour point and long-life characteristics of the mixtures prepared by the methods of the known art, and can be conveniently used as binders for road conglomerates.

We have also found that it is also possible to achieve the same result and thus obtain stable bitumen-polymer mixtures with shorter mixing times provided the mixing is carried out at much higher temperatures than those which according to the known art if exceeded give rise to the danger of polymer degradation.

In other words it has been found, according to the present invention, that there is a minimum heating time corresponding to every heating temperature of the bitumen block polymer mixture, required to give the desired characteristics to the same mixture. The present invention therefore provides a method for obtaining bitumen-polymer mixtures which are stable under fluidity conditions, useful for road uses, consisting of mixing at a temperature from 200°C to 250°C and for a time, depending on the temperature, of between 15 hours and 45 minutes, a mixture comprising:

- 85-98% by weight of a bitumen having a penetration value AT 25°C of between 30 and 220 dmm, a softening point of between 35 and 55°C and a penetration index of between -1.5 and +1.5; and
- 15-2% by weight of a styrene-butadiene-styrene block copolymer having a star or linear structure. In particular, to obtain stabilization with thermal treatment at 200°C this treatment must be prolonged for 11-15 hours, whereas if a higher temperature is used the treatment length is consequently less. Again in particular, for example if the bitumen-polymer mixture is treated at 240°C, 110-130 minutes are required to obtain stabilization, whereas at 230°C, 240-250 minutes are required.

The preferred bitumes, used in the present invention, are of conventional type, ie containing asphaltenes which can be precipitated with n-eptane, asphaltenes which can be precipitated with n-pentane, and the fractions resins, aromatics, saturateds, separable according to the method ASTM 2007. These bitumens are characterized by a penetration value AT 25°C of between 30 and 220 dmm, and preferably of between 60 and 200 dmm; by a softening point of between 35 and 55°C and preferably of between 40 and 50°C and by a penetration index of between -1.5 and +1.5 and preferably of between -1 and +1. However fluxed bitumens, bitumens from visbreaking and bitumens obtained by mixing together various components generally of petroleum origin can also be used. An example of this latter is bitumen containing asphalt precipitated with propane from crude petroleum vacuum residues and aromatics extracted with solvent in refining processes.

The CONVENIENT styrene-butadiene-styrene copolymers for the process of the present invention, have generally an average weight molecular weight Mw from 100,000 to 250,000. In the preferred embodiment these copolymers have a styrene-butadiene ratio of 30/70 by weight.

The preferred mixtures, according to the present invention, contain a bitumen quantity which is between 92 and 97% by weight and a styrene-butadiene-styrene copolymer quantity between 8 and 3% by weight.

As above mentioned, there is a minimum heating time, corresponding to every treating temperature of the bitumen-copolymers mixtures, inside the considered interval, required to give stability to the same mixtures.

The typical temperature values and the corresponding minimum treatment times are reported in the following table:

| Temperature ($^{\circ}$C) | Time (minutes) |
|---|---|
| 200 | 680 |
| 210 | 500 |
| 220 | 340 |
| 230 | 220 |
| 240 | 120 |
| 250 | 50 |

The time/temperature correlation is shown in the attached diagram where the abscissa represents the heating temperature ($^{\circ}$C) of the mixture and the ordinate represents the corresponding minimum heating time (minutes), required to give the necessary stability to the same mixture.

The said correlation between time and temperature can be also represented by the following relation:

$$T = 0.00007t^2 - 0.12616t + 255.1274$$

where
    T =     temperature ($^{\circ}$C)
    t =     time (minutes)

In the practice, values of the heating time higher than the minimum value above indicated, are used as evident in the experimental examples, for prudential reasons.

The above reported time/temperature correlation may undergo little changes due to the actual bitumen and to the actual polymers used. The process of stabilizing the bitumen-polymer mixture according to the present invention is conducted by adding the polymer, for example in the form of powder or granules, to the bitumen and keeping the resultant mixture stirred at the chosen temperature and for the chosen time, preferably in an inert atmosphere, for example under nitrogen.

If desired the actual stabilization stage can be preceded by an initial component mixing and mixture homogenization stage conducted at a temperature of between 160 and 190$^{\circ}$C and with very fast stirring, for example by means of a turbine.

The stability of a bitumen-polymer mixture is evaluated by storing the mixture sample for the desired time in a cylindrical tube maintained at a temperature of 165-170$^{\circ}$C, separating the cylinder ends, after cooling it and then measuring the difference between the softening points of the samples withdrawn at the ends.

A convenient embodiment of the present invention comprises mixing the bitumen with a quantity of between 8 and 20% of polymer by weight, and in a second step diluting the obtained bitumen-polymer mixture with bitumen alone, without additives, until the desired polymer concentration is obtained. The bitumen-polymer mixture obtained in this manner has the same stability under storage as that obtained by thermally treating bitumen and polymer directly in the weight ratio desired for the final mixture. In this particular embodiment it may be convenient to use for preparing the concentrated mixture a bitumen fluxed with refinery fractions, such as aromatic extracts.

After the concentrated mixture has undergone stabilization treatment it can if desired be diluted with a bitumen different from that used to prepare the concentrated mixture.

This method of operation, in which the treatment is carried out on a smaller volume of bituminous mixture, results in a considerable energy saving.

The process according to the present invention can also be applied to bitumen-polymer mixtures which also contain other types of additives, such as antioxidants.

EXAMPLE 1

In this example a bitumen is used having the following characteristics:

| penetration at 25°C | 197 dmm |
|---|---|
| softening point (P.A.) | 41°C |
| penetration index | 0.34 |
| Fraass point | -18°C |
| viscosity at 60°C | 535 poise (53.5 Pa.s) |
| composition (ASTM 2007 modif.) | |
| insoluble in n-heptane | 6.5% |
| insoluble in n-pentane | 7.8% |
| resins | 70.1% |
| aromatics | 8.4% |
| saturateds | 7.2% |

A mixture consisting of 94% of this bitumen and 6% of polymer is kept stirred with a turbine stirred for about 20 minutes at 190°C. The polymer used is of SBS type and has a styrene/butadiene ratio of 30/70 and an average molecular weight Mw of 230,000.

400 g of the dispersion thus obtained are transferred to a 500 ml flask fitted with a stirrer and kept at 210°C for 10 hours under a light flow of nitrogen. On termination of this treatment the bituminous mixture has the following characteristics:

| penetration at 25°C | 100 dmm |
|---|---|
| softening point | 100°C |
| penetration index | 8.7 |

This mixture is then subjected to the storage test in a cylindrical container at 170°C for 1, 5 and 10 days under nitrogen. At the end of these periods the softening points of the top and bottom layers were measured, with the following results:

| | days | | |
|---|---|---|---|
| | 1 | 5 | 10 |
| Softening point (°C): | | | |
| top | 97 | 95 | 99 |
| bottom | 97 | 95 | 98 |

In addition, the following characteristics were determined on the mixture sample which had undergone longest storage:

| penetration at 25°C | 104 dmm |
|---|---|
| penetration index | 8.8 |
| Fraass point (°C) | -24 |

EXAMPLE 2

The bitumen and polymer used in Example 1 are mixed together to obtain a mixture containing 12% of elastomer.

4

This mixture is kept stirred at 180°C for 30 minutes to homogenize the polymer distribution in the bitumen, and is then heated to 250°C for 90 minutes to provide storage stability. After treatment fresh bitumen of 80/100 penetration is added in a quantity such as to adjust the SBS concentration to 6%, after which the mixture is stirred at 150°C for 30 minutes. The resultant mixture has the following characteristics:

| penetration at 25°C (dmm) | 94 |
|---|---|
| softening point (°C) | 96 |
| penetration index | 8.1 |
| Fraass point (°C) | -20 |

The mixture is then stored in a cylindrical container at 170°C under nitrogen. After 5 and 10 days the softening points of the top and bottom layers were measured.

| | days | |
|---|---|---|
| | 5 | 10 |
| Softening point (°C) | | |
| top | 95 | 98 |
| bottom | 96 | 97 |

It is therefore possible to stabilize a concentrated bitumen-polymer mixture and then add just bitumen to this mixture to obtain a more dilute mixture which is equally stable.

EXAMPLE 3

An SBS polymer similar to that used in Example 1 is added to a visbreaking bitumen containing 95.8% of 180/200 (Penetration at 25°C: 212 dmm; softening point: 39°C; penetration index: -0.20) bitumen and 4.2% of 80/100 (Penetration at 25°C: 90 dmm; softening point: 46°C; penetration index: -0.73) bitumen, to give a mixture containing 6% of elastomer.

The mixture is subjected to thermal treatment at 250°C for 90 minutes.

On termination of treatment it shows a penetration at 25°C of 98 dmm. The mixture softening point is then measured a) after one day of storage at 170°C, b) after 5 days and c) after 15 days. The results obtained are shown in the following table.

| Softening point (°C): | a | b | c |
|---|---|---|---|
| top | 78 | 76 | 74 |
| bottom | 77 | 76 | 74 |

The fact that the softening points are less than in the preceding cases is to be attributed to the poorer quality of the bitumen used; however even in this case the thermal treatment has given the bitumen-polymer mixture stability.

EXAMPLE 4

The bitumen used in Example 1 with 6% of SBS added is stirred for 15 minutes at 190°C. The mixture obtained in this manner is firstly treated for 90 minutes at 250°C and is then stored at a temperature of 170°C. On termination of the storage period the following results are obtained.

| | 1 day | 10 days |
|---|---|---|
| Softening point (°C): | | |
| top | 91 | 91 |
| bottom | 91 | 91 |

EXAMPLE 5 (comparison)

6% of SBS with a styrene/butadiene ratio of 30/70 and a Mw of 230,000 is added to a bitumen of the type used in Example 1, the mixture mixed with a turbine stirrer for 30 minutes at 180°C and then stored at 170°C for 8 days. The stability of the resultant product is then evaluated, obtaining the following results.

| Softening point (°C): | |
|---|---|
| top | 113 |
| bottom | 55 |

This product, which was not treated under the conditions or for the time described in the present invention is not stable under storage and after 8 days has practically dissociated into the two components, as can be seen from the softening points of the top and bottom layers.

EXAMPLE 6

In this example the polymer used is a styrene-butadiene-styrene block copolymer of linear type, having an average molecular weight Mw of about 100,000 and a styrene-butadiene ratio of 30/70. A mixture containing 5.5% by weight of this copolymer is prepared from a bitumen containing a 1/1 mixture of 80/100 (Penetration at 25°C: 90 dmm; softening point: 44.5°C; penetration index: -1.26) and 180/200 (Penetration at 25°C: 196 dmm; softening point: 38°C; penetration index: -1.04) bitumen.

The copolymer is kept stirred with a turbine stirrer at 190°C and the so obtained dispersion has the following characteristics:

| penetration at 25°C | 72 dmm |
|---|---|
| Fraass point: | -19°C |
| viscosity at 60°C | 2777 P |

The softening points of the mixture, after 22 hours of storage at 165°C, are the following:

| top | 93.6°C |
|---|---|
| bottom | 61°C |

The same mixture has undergone stabilization treatment at 250°C for 90 minutes. After 5 days of storage at 165°C, the softening points are the following:

| top | 76.1°C |
|---|---|
| bottom | 76°C. |

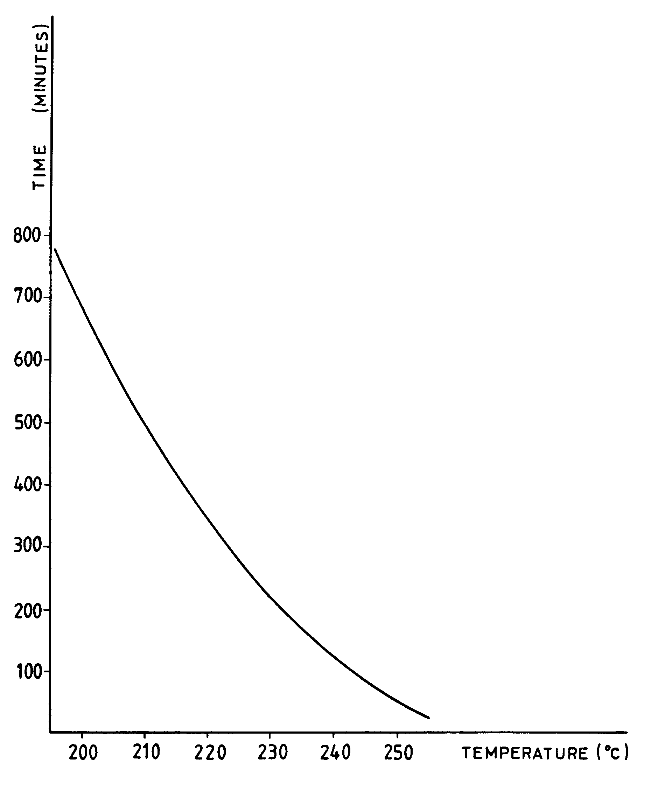

**Claims**

1. A method for obtaining bitumen-polymer mixtures which are stable also under fluidity conditions, useful for road uses, consisting of mixing at a temperature of from 200°C to 250°C and for a time of between 15 hours and 45 minutes, a mixture comprising :

- 85-98% by weight of a bitumen having a penetration value at 25°C of between 30 and 220 dmm, a softening point of between 35 and 55°C and a penetration index of between -1.5 and +1.5, and
- 15-2% by weight of a styrene-butadiene-styrene block copolymer having a star or linear structure, characterised in that temperature and minimum time for obtaining bitumen polymer mixtures which are stable also under fluidity conditions are in relation:

$$T = 0.00007\ t^2 - 0.12616\ t + 255.1274$$

where

    T =    temperature (°C)
    t =    time (minutes).

2. A method as claimed in claim 1, wherein the bitumen is chosen from bitumens having a penetration value at 25°C of between 60 and 200 dmm; a softening point of between 40 and 50°C and a penetration index of between -1 and +1.

3. A method as claimed in claim 1, wherein the styrene-butadiene-styrene copolymer has an average weight molecular weight Mw of from 100,000 to 250,000.

4. A method as claimed in claim 1, wherein the styrene-butadiene ratio is 30/70 by weight.

5. A method as claimed in claim 1, wherein the treated mixture comprises a 92-97% by weight of bitumen and a 8-3% by weight of styrene-butadiene-styrene copolymer.

6. A method as claimed in claim 1, wherein the process is carried out under inert atmosphere.

**Patentansprüche**

1. Verfahren zur Gewinnung von für Straßenanwendungen nützlichen Bitumen-Polymer-Gemischen, die auch unter Fließfähigkeitsbedingungen stabil sind, bestehend aus der Herstellung einer Mischung bei einer Temperatur von 200° C bis 250° C und während einer Zeit zwischen 15 Stunden und 45 Minuten, enthaltend:
   - 85 - 98 Gew.-% eines Bitumens mit einem Penetrationswert bei 25° C zwischen 30 und 220 dmm, einem Erweichungspunkt zwischen 35 und 55° C und einem Penetrationsindex zwischen -1,5 und + 1,5 und
   - 15 - 2 Gew.-% eines Styrol-Butadien-Styrol-Blockcopolymeren mit Sternstruktur oder linearer Struktur,

   dadurch gekennzeichnet, daß Temperatur und Mindestzeit für die Gewinnung der auch unter Fließfähigkeitsbedingungen stabilen Bitumen-Polymer-Mischungen der Beziehung gehorchen:

$$T = 0,00007\ t^2 - 0,12616\ t + 255,1274$$

worin

    T =    Temperatur (° C)
    t =    Zeit (Minuten) sind.

2. Verfahren nach Anspruch 1, worin das Bitumen einen Penetrationswert bei 25° C zwischen 60 und 200 dmm, einen Erweichungspunkt zwischen 40 und 50° C und einen Penetrationsindex zwischen - 1 und + 1 aufweist.

3. Verfahren nach Anspruch 1, worin das Styrol-Butadien-Styrol-Copolymer ein durchschnittliches Molekulargewicht Mw von 100.000 bis 250.000 aufweist.

4. Verfahren nach Anspruch 1, worin das Styrol-Butadien-Gewichtsverhältnis 30/70 ist.

5. Verfahren nach Anspruch 1, worin die behandelte Mischung 92 - 97 Gew.-% Bitumen und 8 bis 3 Gew.-% Styrol-Butadien-Styrol-Copolymer enthält.

**6.** Verfahren nach Anspruch 1, worin unter inerter Atmosphäre gearbeitet wird.

**Revendications**

**1.** Procédé pour obtenir des mélanges bitume-polymère qui sont stables également à l'état fluide, utiles pour la construction des routes, consistant à mélanger, à une température comprise entre 200 °C et 250 °C et pendant une durée comprise entre 15 heures et 45 minutes, un mélange comprenant :
- de 85 - 98 % en poids d'un bitume ayant une pénétrabilité à 25°C compris entre 30 et 220 dixièmes de millimètres, un point de ramollissement compris entre 35 et 55 °C et un indice de pénétration compris entre -1,5 et +1,5, et
- de 15 - 2 % en poids d'un copolymère séquencé styrène-butadiène-styrène ayant une structure linéaire ou étoilée,

caractérisé en ce que la température et le temps minimum nécessaires pour obtenir des mélanges bitume-polymère qui sont stables également à l'état fluide sont reliés par l'équation :

$$T = 0{,}00007\, t^2 - 0{,}12616t + 255{,}1274$$

où T = température (en °C) et t = temps (en minutes).

**2.** Procédé conforme à la revendication 1 dans lequel le bitume est choisi parmi les bitumes ayant une pénétrabilité à 25 °C comprise entre 60 et 200 dixièmes de millimètres, un point de ramollissement compris entre 40 et 50°C et un indice de pénétration compris entre -1 et +1.

**3.** Procédé conforme à la revendication 1 dans lequel le copolymère styrène-butadiène-styrène a une masse moléculaire comprise entre 100 000 et 250 000.

**4.** Procédé conforme à la revendication 1 dans lequel le rapport en poids styrène/butadiène est égal à 30/70.

**5.** Procédé conforme à la revendication 1 dans lequel le mélange traité contient de 92 - 97 % en poids de bitume et de 8 - 3 % en poids de copolymère styrène-butadiène-styrène.

**6.** Procédé conforme à la revendication 1 dans lequel le procédé est réalisé sous une atmosphère inerte.